# EUROPEAN PATENT SPECIFICATION

(11) **EP 2 942 903 B1**
(45) Date of publication and mention of the grant of the patent: **12.02.2020**
(21) Application number: 14290143.8
(22) Date of filing: 08.05.2014
(51) Int. Cl.: H04L 12/14, H04L 29/06, H04L 9/32, H04L 12/10

(54) **METHOD FOR CONTROLLING A NETWORK SESSION**
VERFAHREN ZUR STEUERUNG EINER NETZWERKSSITZUNG
PROCÉDÉ POUR COMMANDER UNE SESSION DE RÉSEAU

(43) Date of publication of application: 11.11.2015
(73) Proprietor: Alcatel Lucent, 91620 Nozay (FR)
(72) Inventor: Hirler, Hans-Peter, 70435 Stuttgart (DE)
(74) Representative: Louis Pöhlau Lohrentz

(56) References cited:
- US-A1- 2011 208 637
- "SSL/TLS Strong Encryption: An Introduction - Apache HTTP Server", , 2 May 2013 (2013-05-02), XP055149260, Retrieved from the Internet: URL:http://web.archive.org/web/20130502144 856/http://httpd.apache.org/docs/trunk/ssl /ssl_intro.html [retrieved on 2014-10-28]
- DIERKS INDEPENDENT E RESCORLA RTFM T ET AL: "The Transport Layer Security (TLS) Protocol Version 1.2; rfc5246.txt", THE TRANSPORT LAYER SECURITY (TLS) PROTOCOL VERSION 1.2; RFC5246.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 August 2008 (2008-08-01), XP015060256,
- V V Cardellini Cardellini ET AL: "Dynamic load balancing on Web-server systems", IEEE Internet Computing, 1 January 1999 (1999-01-01), pages 28-39, XP055092866, DOI: 10.1109/4236.769420 Retrieved from the Internet: URL:http://ieeexplore.ieee.org/xpls/abs_al l.jsp?arnumber=769420

## Description

### Field of disclosure

The disclosure is situated in the field of network sessions and more particularly relates to a process, a user entity and a network entity for controlling a network session.

### Background

During a network session, such as a communication network session throughout the internet, a variety of different suppliers ensure e.g. a stable connection and delivery of data requested by an enquirer, such as a internet user. During such a network session a variety of different suppliers and network nodes throughout several networks, such as the internet, local area networks and wireless networks, are involved and supply the user e.g. with the requested data, such a video. During the last years the load in networks, such as the internet, has increased due to a more frequent usage of the internet and in addition an increased number of participants, such as internet-users. Up to now this increasing traffic was handled by the suppliers by increasing the bandwidth of the communication network e.g. by introducing fiber optics that offers an increased maximal bandwidth.

The reference "SSL/TLS Strong Encryption: An Introduction - Apache HTTP Server Version 2.5" (XP 055149260, 2 May 2013) describes a method where messages are transmitted using an encryption, in partiular a public key. A server sends a message containing the server certificate to the client and requests the client certificate from the client. The client sends a message to the server, wherein the message contains the client certificate.

DIERKS INDEPENDENT E RESCORLA RTFM T ET AL: "The Transport Layer Security (TLS) Protocol Version 1.2" (rfc5246.txt; XP 015060256, 1 August 2008) describes a handshake procedure where a client sends a client certificate to a server.

V V Cardellini Valeria et al.: "Dynamic load balancing on web-server systems" (XP 055092866, 1 January 1999) describes load balancing where a dispatcher identifies each server through a private address. A client sends a request for a document to the dispatcher which selects the appropriate server.

US 2011/208637 A1 describes a system where green energy is provided to a user. The green power generation apparatus issues certificates which certifies that the power is green power.

Thus it is the objective of the disclosure to provide an improvement for controlling a network session of an individual user.

### Summary

The objective of the present disclosure is achieved by a method and an apparatus as defined in the attached claims.

In an example, a method is disclosed for controlling a network session, the network comprising at least one user entity and a group of one or more network entities. The method comprises to provide by at least one of the group of network entities one or more services for the at least one user entity during the network session; and to receive during the network session a message by at least one network entity of the group of network entities, wherein the message contains one or more certificates; and to retrieve one or more certificates by at least one network entity of the group of network entities according to one or more of the provided services.

In an example, a user entity is disclosed, the user entity comprising a control unit, wherein the control unit is adapted to send a message containing one or more certificates to at least one network entity of a group of network entities during a network session.

In an example, a network entity is disclosed, the network entity comprising a control unit, wherein the control unit is adapted to receive a message containing one or more certificates and to retrieve one or more certificates of said one or more certificates according to one or more services provided for at least one user entity during a network session.

The process for controlling a network session according to examples of the disclosure enables a direct control of the network session by an individual user, e.g. by real time monitoring one or more certificates retrieved by a group of one or more network entities. Besides the control of the network session the examples of the disclosure also allow a regulation of network load by offering the possibility of a uniform utilization of the network. This is rendered possible by a change in the number of retrieved certificates. In particular it is possible to control the overall network traffic by a control of the total number of certificates or the number of retrieved certificates by a group of network entities.

By a group of one or more network entities is meant one or more network entities that are associated during the network session, in particular one or more network entities that are involved in providing a service to the at least one user entity. For example two or more network entities might communicate during a network session to provide a service for the at least one user entity, such as voice over IP, where e.g. one or more network entities forward a message to a predetermined destination. Thus by a group of one or more network entities is meant one or more network entities that interact with each other during the network session to provide a service to the at least one user entity.

Further advantages are achieved by examples of the disclosure indicated by the dependent claims.

In an example, the at least one user entity transmits during the network session the message to the at least one network entity of the group of network entities, wherein the message contains one or more certificates.

In an example, the message from the at least one user entity is transmitted during the network session to a first network entity of the group of network entities and from the first network entity of the group of network entities to a second network entity of the group of network entities, i.e. a first network entity of the group of network entities receives the message during the network session and the first network entity of the group of network entities forwards the message to a second network entity of the group of network entities, and wherein the first network entity of the group of network entities and/or the second network entity of the group of network entities retrieves one or more certificates. In an example, the message is sent via n network entities of the group of network entities, where n is an integer, whereby each of the network entities of the group of network entities retrieves one or more certificates according to the service provided by the n-th network entity of the group of network entities. This allows further network entities of the group of network entities to retrieve one more certificates according to provided service, respectively. Furthermore it is ensured that each network entity that provides a service for the at least one user entity during the network session retrieve one more certificates according to provided service, respectively.

In an example, the message is a data frame of the network session. In an example, a data frame comprises one or more delimiters to denote the beginning and end of the data frame, a destination address, a source address, control information to control the data stream, one ore more payloads, a checksum to ensure data integrity and a certificate section, whereas the certificate section contains the one more certificates. For example the data frame of the network session might be an Ethernet frame during an Ethernet session.

In an example, the data frame comprises at least a destination address, a source address, a data section and a certificate section.

In an example, the at least one network entity of the group of network entities determines the energy consumption of the one or more provided services and retrieves one or more certificates according to the determined energy consumption. In an example, the one or more certificates retrieved by the at least one network entity of the group of network entities correspond to the energy consumption of the provided service of the at least one network entity of the group of network entities. In other words the certificates grant access to the network and their total number correlate with energy consumption of the network session of the at least one user entity. Furthermore the certificates might be valid for all telecommunication networks. This allows the reduction of the energy consumption during the network session and reduces the costs caused by individual users. Besides the reduction in energy consumption, according to anexample, this minimizes the network session time and network traffic. In particular this improves schedule work with respect to energy consumption in temporary networks like Software Definied Networking (SDN) and NFV (Network Function Virtualization). Additionally this allows an allocation the energy consumption to at the least one user entity.

In an example, the control unit is adapted to determine the energy consumption of the network entity according to one or more of the provided services and/or to request one or more certificates from at least one user entity.

In an example, one or more certificates are received by the at least one user entity from a certificate generation entity.ln an example, the certificate generation entity is adapted to associate the one or more certificates with one or more network addresses, in particular internet protocol (IP) addresses. This enables to control the total number of certificates. Furthermore it is possible that the certificate generation entity retracts one or more certificates. The user may receive the certificates generated by the certificate generation entity by buying them with the respective currency of the economic area or with a binary net currency like BitCoin. In other words, the certificate generation entity generates, retracts and swaps the certificates, i.e. for accounting units such as currency/kWh or currency/bit.

In an example, the one or more certificates are deleted at the end of the network session. In other words, the certificates are retrieved by at least one network entity of the group of network entities during the network session, wherein the certificates are accredited to the at least one network entity of the group of network entities and are deleted at the end of the network session. Thus the certificates might be newly generated during a new network session.

In an example, the user entity and/or the network entity comprise a non-transitory memory device adapted to store one or more certificates.

In an example, the at least one user entity receives a request requesting one or more certificates. Then the at least one user entity transmits a message containing one or more certificates according to the received request. Therefore one or more network entities of the group of network entities request one or more certificates according to the provided service. In other words, network entities visited by e.g. an Ethernet frame are requesting one or more certificates according to one or more of the provided services, i.e. the energy consumption. Then one or more energy certificates are transmitted from the at least one user entity to the requesting one or more network entities of the group of network entities. This allows to request by at least one network entity of the group of network entities the one more certificates according to the service provided.

In an example, one or more of the retrieved certificates are exchanged between two or more network entities of the group of network entities. It is possible that one or more of the services is provided by further network entities of the group of network entities that are involved in the network session, wherein the further network entities of the group of network entities might be supplied with one or more certificates according to provided services by exchange between the further network entities of the group of network entities, i.e. more network entities of the group of network entities forward one or more of the retrieved certificates to one or more other network entities. Thus this exchange might be carried out if a further network entity provides a service to one or more network entities of the group of network entities during the network session. This exchange may also be carried out when the network session is already finished.

In an example, the at least one of the group of network entities is selected from the group consisting of a router, a switch, a server, a gateway and an access point.

In an example, the network session is a communication network session, in particular an internet session.

In an example, the one or more certificates are binary coded certificates. This results in a binary code, i.e. using the two binary digits 0 and 1 and allows a secure transmission of one or more certificates. In an example, the certificates are encrypted to verify the authenticity, i.e. using a digital signature or quantum cryptography. The certificates may be encrypted using an encryption algorithm to protect the data in transit and or at the at least one entity or the group of one or more network entities.

In an example, the one or more certificates are associated with one or more network addresses, in particular internet protocol (IP) addresses. In an example, the associated network addresses are selected out of the Internet Protocol Version 6 (IPv6) address resources and the resulting one or more certificates are preserved at the end of the network session. This allows an exchange between two or more network entities of the group of network entities when the network session is already finished.

In an example, at least one network entity of the group of network entities provides an electrical current for the at least one user entity. In an example, the network session is a power line network session and the data section of the data frame according to an example comprises information related to the power line session, in particular control information of the power line session.

In an example, at least one network entity of the group of network entities is a virtual power station (VPS) and the network further comprises at least a second network entity of the group of network entities. In an example, the VPS is adapted to control at least the second network entity of the group of network entities. Furthermore the VPS provides means for transmitting one or more certificates of said one ore more certificates to the at least second network entity of the group of network entities. Means for transmitting one more certificates of said one ore more certificates are the control unit, which might be connected to a transreceiver or a transmitter, such as I/O devices adapted to transmit a message containing one or more certificates to at the least second network entity of the group of network entities during a network session.

In an example, the at least one of the group of network entities is selected from the group consisting of a transformer station, a electricity producer, a electricity network operator, a distribution grid and a power line.

### Brief description of the figures

These as well as further features and advantages according to examples of the present disclosure will be more completely understood by the following detailed description of examples with reference to the figures, in which:
- Fig. 1: depicts a schematic representation of user entities and network entities within a network during a network session
- Fig. 2: depicts a schematic representation of user entities and network entities within a network during a network session
- Fig. 3: depicts a schematic representation of user entities and network entities within a network during a network session
- Fig. 4: depicts a data frame suitable for controlling a network session
- Fig. 5: depicts a flow diagram
- Fig. 6: depicts a flow diagram
- Fig. 7: depicts a schematic representation of user entities and network entities within a network during a network session

### Detailed description of examples

In the following examples of the present disclosure are described for illustrative reasons, while the scope of the present disclosure is defined by the claims. Features of examples may be combined to implement further examples. Thus the examples are not meant exclusive, but to be combinable.

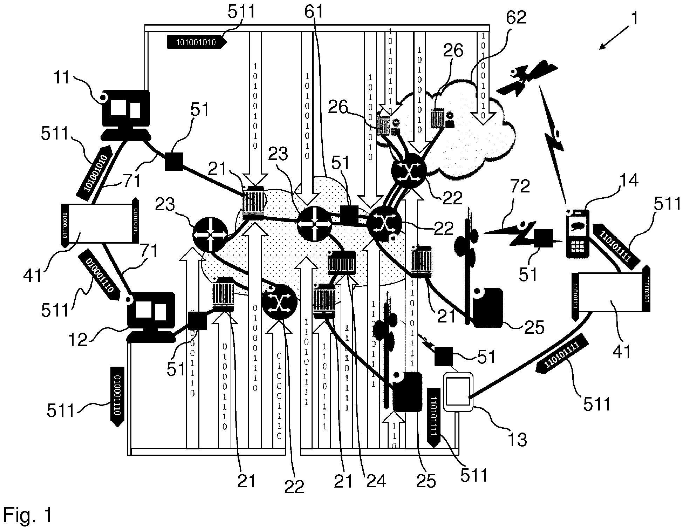

Fig. 1 depicts a schematic representation of user entities 11 to 14 and network entities 21 to 26 within a network 1 during a network session. The network entities 21 to 26 and the user entities 11 to 14 are for example located in different networks 61 (e.g. Internet), 62 (e.g. Cloud). The skilled person will appreciate that the networks 61, 62 might comprise a plurality of additional devices and further network entities 21 to 26 with various functions, such as application elements which are not depicted. Alternatively the network entities 21 to 26 and the user entities 11 to 14 may be located within one network. The network 1 or the networks 61, 62 might be wide area networks, such as the internet, local area networks or wireless networks or combinations thereof. Moreover the network 1 might be a communication network, e.g. based on Ethernet using TCP/IP protocols. Furthermore such networks might be spanned over several countries, villages or sites.

The network entities 21 to 26 and the user entities 11 to 14 are connected, in particular via a wired connection 71 or via a wireless connection 72. For example the wired connection 71 might be based on twisted pair cables, optical fibers or copper cables or the like and the wireless connection 72 might be based on UMTS, LTE or GPRS or the like. The connection between the user entities 11 to 14 and the network entities 21 to 26 may ensure that each user entity 11 to 14 and each network entity 21 to 26 is able to communicate with each other.

The network entities 21 to 26 provide one or more services to the user entities 11 to 14 during a network session. The network session might be initiated by the user entities 11 to 14, e.g. by a request for downloading a video or visiting a webpage. Therefore the network entities 21 to 26 that are involved during the network session provide a service to the user entities 11 to 14. Thus the network entities 21 to 26 that are involved in during the network session may belong to a group of network entities 21 to 26. Thus one or more network entities 21 to 26 of the group of network entities 21 to 26 is involved during the network session, which might be initiated by at least one of the user entities 11 to 14.

By a group of one or more network entities 21 to 26 is meant one or more network entities 21 to 26 that are associated during the network session, in particular one or more network entities 21 to 26 that are involved in providing a service to the at least one user entity 11 to 14. For example two or more network entities 21 to 26 might communicate during a network session to provide a service for the at least one user entity 11 to 14, such as voice over IP, where e.g. one more network entities 21 to 26 forward a message to a predetermined destination. Thus by a group of one or more network entities 21 to 26 is meant network entities 21 to 26 that interact with each other during the network session to provide a service to the at least one user entity 11 to 14.

The network entities 21 to 26 might be for example an access point 21, a switch 22, a router 23, a gateway 24, a wireless communication unit 25 or a server 26. For example the user entity 11 might transmit a message 51 to the user entity 14. In this example the network entities 21, 23, 22 might provide forwarding a message 51 from the user entity 11 to the user entity 14 as a service to the user entity 11. In addition the service provided by the access point 21 might be providing access to the network 1 for the user entity 11 and the switch may provide the additional service of deciding to forward the message 51 preferably only to the network entity 21 to which the destination user entity 14 is connected. In this manner each of the network entities 21 to 26 of the group of network entities 21 to 26 that is involved during the network session provide one or more services to at least one user entity 11 to 14.

The user entities 11 to 14 might be for example a home computer, a smart phone, a tablet pc, a cell phone or any other device which may have access to the network 1.

The message 51, which is transmitted during the network session, contains one or more certificates 511. Each network entity 21 to 26 that provides one or more services to at least one of the user entities 11 to 14 retrieves one or more certificates 511 according to one or more of the provided services. For example the user entity 11 may request a video from the server 26 and therefore transmitted a message 51 containing one or more certificates 511 to the access node 21. After receiving the message 51 containing one or more certificates 511 the access node retrieves one or more certificates of said one or more certificates according to the provided service, i.e. providing access to the network 1 for the user entity 11 and forwarding the message 51 containing one or more certificates 511. Then the router 23 receives the message 51 containing one or more certificates 511 and retrieves one or more certificates 511 according to the provided service, i.e. forwarding the message 51 containing one or more certificates 511. These steps may be repeated until the message 51 containing one or more certificates 511 is received by the server 26. The server will retrieve one or more certificates 511 according to the provided service, i.e. providing the video to the user entity 11. The retrieving of one or more certificates 511, which are contained in the message 51, by the respective network entity 21 to 26 is depicted in Fig. 1 by a schematic allocation of the certificates 511 to the network entities 21 to 26. Moreover as depicted in Fig. 1 the message 51 containing one or more certificates 511 may be transmitted from the user entities 13, 14 over a wireless communication unit 25, e.g. based on UMTS, LTE or GPRS and the like. Alternatively, the message 51 containing one or more certificates 511 may be transmitted by the user entity 12 via a wired connection 71. In each case the network entities 21 to 26 that are involved during the network session retrieve one or more certificates according the provided service. This ensures that each network entity 21 to 26 that provides a service to the user entities 11 to 14 during the network session retrieve one or more certificates according to one or more of the provided services by the respective network entity 21 to 26. In other words, the certificates 511 are retrieved step by step during the network session as each involved network entity 21 to 26 retrieves one or more certificates 511 according one or more of the provided services. This enables e.g. to notify the user entities 11 to 14 if the certificates are drawing to a close.

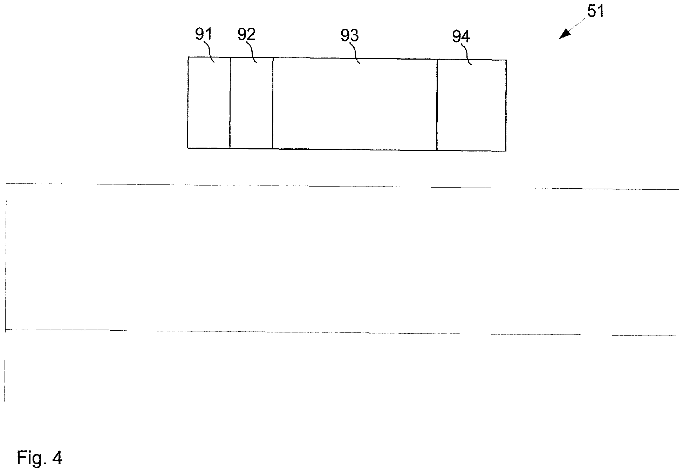

The message 51 might be a data frame 51 of the network session. The data frame 51 might comprise one or more delimiters to denote the beginning and end of the data frame 51, a destination address 91, a source address 92, control information to control the data stream, one ore more payloads 93, a checksum to ensure data integrity and a certificate section 94, whereas the certificate section 94 contains the one more certificates 511, such as described below with respect to Fig. 4. For example the data frame of the network session might be an Ethernet frame during an Ethernet session.

Here the above described process for controlling a network session enables a direct control of the network session by an individual user, e.g. by real time monitoring one or more certificates retrieved by a group of one or more network entities. Besides the control of the network session the examples of the disclosure also allow a regulation of network load by offering the possibility of a uniform utilization of the network. This is rendered possible e.g. by a change in the total number of retrieved certificates. In particular it is possible to control the overall network traffic by a control of the total number of certificates or the number of retrieved certificates by a group of network entities.

Optionally, the network entities 21 to 26 determine the energy consumption of one or more of the provided services during the network session and retrieves one or more certificates 511 according to the determined energy consumption. Here the certificates 511 grant access to the network 1, in particular to the usage of the network 1 or applications provided by network entities 21 to 26 within the network 1. Furthermore in this example the certificates 511 correlate with the energy consumption of the respective network entity 21 to 26. Thus the overall energy consumption during the network session of individual network entities 11 to 14 may be determined. Here it is possible to allocate the energy consumption of the network session to the network entities 11 to 14. The certificates 511 might be valid for all telecommunication networks. The retrieving of one or more certificates 511 according to the determined energy consumption by the network entities 21 to 26 allows the reduction of the energy consumption during a network session and reduces the costs caused by individual user entities 11 to 14. Besides the reduction in energy consumption this minimizes the network session time and network traffic. In particular this improves schedule work with respect to energy consumption in temporary networks like Software Definied Networking (SDN) and NFV (Network Function Virtualization). Additionally this allows an allocation the energy consumption to at the least one user entity 11 to 14. Here it might be possible to achieve a more uniform utilization of the network 1, i.e. by increasing the number of retrieved certificates 511 during periods of high network load.

More specifically the one or more certificates 511 are binary coded certificates 511. This results in a binary code, i.e. using the two binary digits 0 and 1 and allows a secure transmission of one or more certificates 511. Here the certificates 511 might be encrypted to verify the authenticity, i.e. using a digital signature. The certificates 511 may be encrypted using an encryption algorithm to protect the data in transit and or at the at least one entity 11 to 14 or the group of one or more network entities 21 to 26. The certificates 511 may be stored at the user entities 11 to 14 and the network entities 21 to 26 at a non-transitory memory device adapted to store one or more certificates, whereas the non-transitory memory device might be located e.g. on a network card.

Optionally, the user entities 11 to 14 may receive a request requesting one or more certificates 511. For example after providing a service to the user entity 12, i.e. forwarding the message 51, the switch 22 may request one or more certificates 511 from the user entity 12 according to one or more of the provided services. Then the user entity 12 may transmit the message 51 containing one or more certificates 511 according to the received request. Here, each network entity 21 to 26 request one or more certificates 511 according to the provided service. This enables each network entity 21 to 26 that provided a service to a user entity 11 to 14 during the network session to retrieve one or more certificates 511. The request might be sent after the network session is finished to ensure that the respective network entity 21 to 26 retrieves the requested one or more certificates 511.

The network 1 further comprises a certificate generation entity 41. The certificate generation entity 41 generates the certificates 511 and may transmit the certificates 511 to the user entities 11 to 14 via the network 1. The certificates 511 may be generated by a certificate generator, which is not depicted. The certificates 511 may be included in the message 51 to transmit them to the user entities 11 to 14, i.e. over the network 1, such as the internet. Optionally the certificate generation entity 41 may retract and swap the certificates 511. The user entities 11 to 14 may receive the certificate 511 e.g. by buying the certificates 511 in the respective currency of the economic area where the certificate generation entity 41 is located. The user entities 11 to 14 may also retract or swap one or more certificates 511 to the certificate generation entities 41. Here the user entities 11 to 14 may change one or more certificates 511 into the respective currency of the economic area where the certificate generation entity 41 is located. Alternatively a binary net currency like BitCoin may be used to receive or change one or more certificates 511 by the user entities 11 to 14. A suitable accounting unit for the one or more certificates 511 might be currency/bit or currency/kWh. This enables each user entity 11 to 14 to control the individual energy costs. Moreover certificates 511 might be allocated to user entities 11 to 14 or network entities 21 to 26 if e.g. the user entities 11 to 14 or the network entities 21 to 26 utilize green energy, such as wind energy.

Optionally the certificate generation entity 41 may be adapted to associate the one or more certificates 511 with one more network addresses, in particular internet protocol (IP) addresses. Here the network addresses might be selected out of the Internet Protocol Version 6 (IPv6) address resources. This might for example result in that the one or more certificates 511 are preserved at the end of the network session. In other words, the one or more certificates 511 are permanent. This ensures for example that the certificates might be exchanged between the network entities 21 to 26 when the network session is already finished. Alternatively, the one or more certificates 511 may be deleted at the end of the network session. Here the one or more certificates 511 are accredited to the network entities 21 to 26 that provided one or more services to the user entities 11 to 14 before the one or more certificates 511 are deleted at the end of the network session. In other words the one or more certificates 511 are temporary and might be newly generated during a new network session.

Optionally the network entities 21 to 26 may exchange the retrieved certificates 511 according to one or more of the provided services. It might be possible that a network entity 21 to 26 might join the network session, i.e. due to a failure of a network entity 21 to 26. To ensure that the newly involved network entity 21 to 26 retrieves one or more certificates according to the provided service the network entities 21 to 26 may exchange the retrieved certificates 511. Furthermore it is possible that one of the network entities 21 to 26 provide one or more services to one or more network entity of the network entities 21 to 26 and therefore may exchange one or more certificates 511. In other words the one or more certificates 511 might be exchangeable or tradable over the network 1.

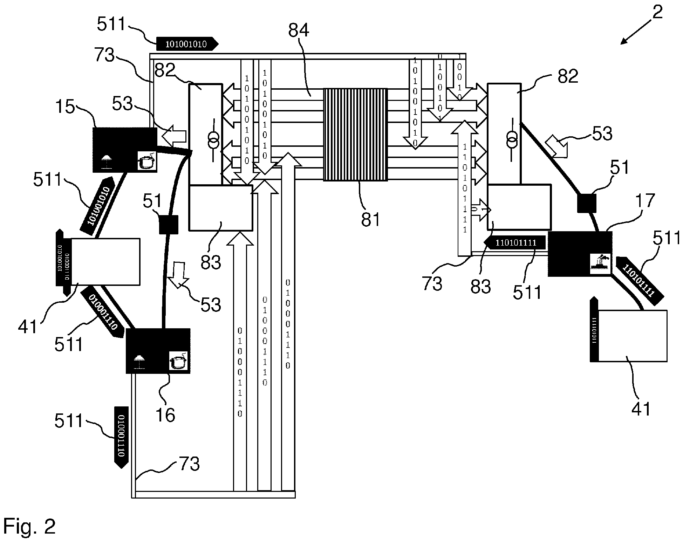

Fig. 2 depicts a schematic representation of user entities 15 to 17 and network entities 81 to 84 within a network 2 during a network session. The network entities 81 to 84 and the user entities 15 to 17 are for example located within the networks 2. The skilled person will appreciate that the network 2 might comprise a plurality of other devices and further network entities 81 to 84 with various functions, such as application elements which are not depicted. Alternatively the network entities 81 to 84 and the user entities 15 to 17 may be located in different networks. Furthermore such networks might be spanned over several countries, villages or sites.

The network entities 81 to 84 and the user entities 15 to 17 are connected, in particular via a powerline 73. The skilled person will appreciate a variety of different ways to connect the user entities 15 to 17 and the network entities 81 to 84, e.g. by power cables or inductive/capacitive coupling or electromagnetic energy transfer.

The network entities 81 to 84 provide one ore more services to the user entities 15 to 17 during a network session, in particular providing an electrical current 53 to the user entities 15 to 17, wherein the electrical current 53 is provided via the powerlines 73. Here the network 2 might be a power line network for electric power and for telecommunication data in the frame of smart grid. The network session might be a power line network session.

The network entities 81 to 84 might be for example a electricity producer 81, a transformer station 82, a electricity network operator 83 and a distribution grid 84. The distribution grid might comprise a low-voltage power grid 230V/400V, a medium voltage power grid up to 50kV, a high-voltage power-grid 110kV and a supergrid 220kV-380kV. In this example the network entities might provide services such as generation of electricity, voltage transformation, provision and distribution of electricity and providing transport of electricity e.g. via the distribution grid 84. In this manner each network entity 81 to 84 provides a service to the user entities 15 to 17.

The user entities 15 to 17 might be for example a private home, such a house or flat or industrial consumers, such as a factory.

Regarding the transmission of the message 51, wherein the message 51 contains one or more certificates 511, and the certificate generation entity 41 it is referred to the description of Fig. 1.

Optionally the data section of the data frame 51 might comprise information related to the power line session, in particular control information of the power line session. Here it is possible to use the data section 93 of the frame 51, which might have a size of 46 to 1500 byte, to insert information related to the power line session.

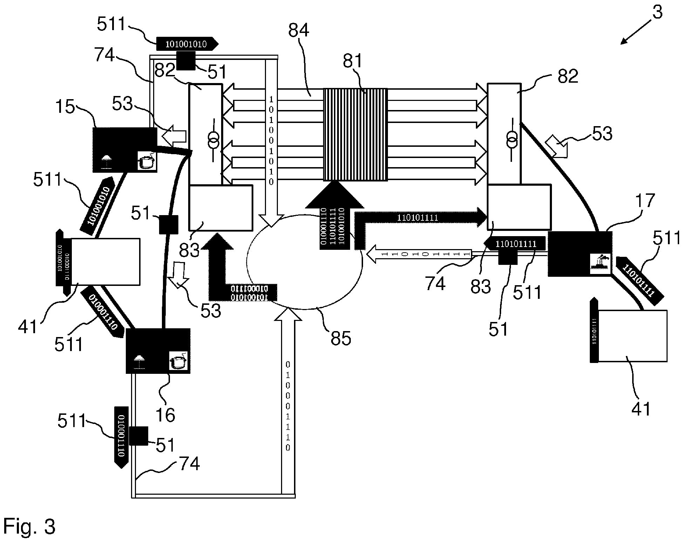

Fig. 3 depicts a schematic representation of user entities 15 to 17 and network entities 81 to 85 within a network 3 during a network session. Regarding the user entities 15 to 17 and the network entities 81 to 84 it is referred to the description of Fig. 2. The network 3 comprises the optional virtual power station (VPS) 85. The VPS 85 is connected to the other network entities 81 to 84, e.g. via datalines 74, such as twisted pair cables, optical fibers, copper cables or wireless communications based on UMTS, LTE or GPRS or the like. In particular the VPS 85 might be connected via the internet to the user entities 15 to 17 and to the network entities 81 to 84. Preferably the VPS 85 might be connected via the power line of the electricity network operator 83 to the user entities 15 to 17 and to the network entities 81 to 84. The VPS 85 may be adapted to control one or more network entities 81 to 84. Furthermore the VPS 85 transmit one or more certificates 511 to one or more network entities 81 to 84 of the group of network entities 81 to 84 during the network session. Regarding the message 51, which contains one or more certificates 511 it is referred to the description of Fig. 1. The VPS 85 may comprise a transreceiver adapted to receive and/or transmit the message 51 containing one or more certificates 511. Here a transreceiver is an I/O device capable of both transmitting and receiving the message 51. During the network session the user entities 15 to 17 transmit the message 51 containing one or more certificates 511 to the VPS 85. The VPS 85 then may transmit the certificates 511 to the network entities 81 to 84 according to one more of the provided services during the network session. In other words the VPS 85 may centrally control one or more network entities 81 to 84 and delivers the one more certificates 511 to the network entities 81 to 84.

Fig. 4 depicts a data frame 51 suitable for controlling a network session. As described above the data frame 51 may comprise at least a destination address 91, a source address 92, a data section 93 and a certificate section 94. Furthermore the data frame 51 may comprise one or more delimiters to denote the beginning and end of the data frame 51. The certificate section 94 might contain one more certificates 511. As described above one or more certificates 511 of said one or more certificates 511 are retrieved by at least one network entity 21 to 26 and 81 to 85 of a group of network entities 21 to 26 and 81 to 85 according to one or more of the provided services. For example the data frame 51 of the network session might be an Ethernet frame during an Ethernet session the data section 93 might have a size of 46 to 1500 Byte.

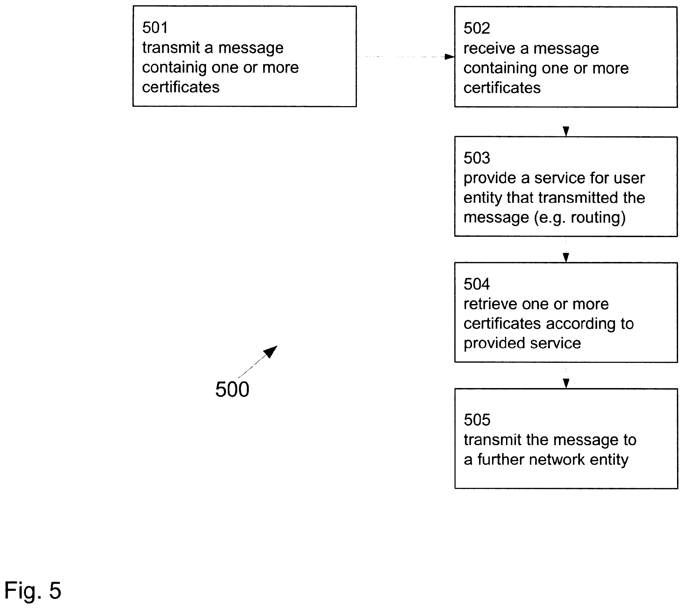

Fig. 5 depicts a flow diagram. Specifically the process 500 is adapted to control a network session and suitable for use within the context of the connected user entities and network entities described above. Generally speaking the process 500 of Fig. 5 contemplate the control of a network session in a network, the network comprising at least one user entity and a group of one or more network entities.

At step 501 the at least one user entity transmit a message to a first network entity of the group of network entities, wherein the message contains one or more certificates.

At step 502 the first network entity of the group of network entities receives the messages containing or more certificates.

At step 503 the first network entity of the group of network entities provides one or more services for the at least one user entity. For example the one more of the provided services might be determining the next hop for the message and the later routing to a destination according to step 505, wherein the destination might be determined by the destination address, such as described above with respect to Fig. 4. Moreover, the first network entity of the group of network entities might provide a further service to the at least one user entity such as calculating an alternative route to the destination.

At step 504 the first network entity of the group of network entities retrieves one or more certificates according to one or more of the provided services.

At step 505 the first network entity of the group of network entities may optionally transmit the message to a second network entity of the group of network entities. Alternatively the first network entity of the group of network entities may provide further services such as described with respect to Fig. 1.

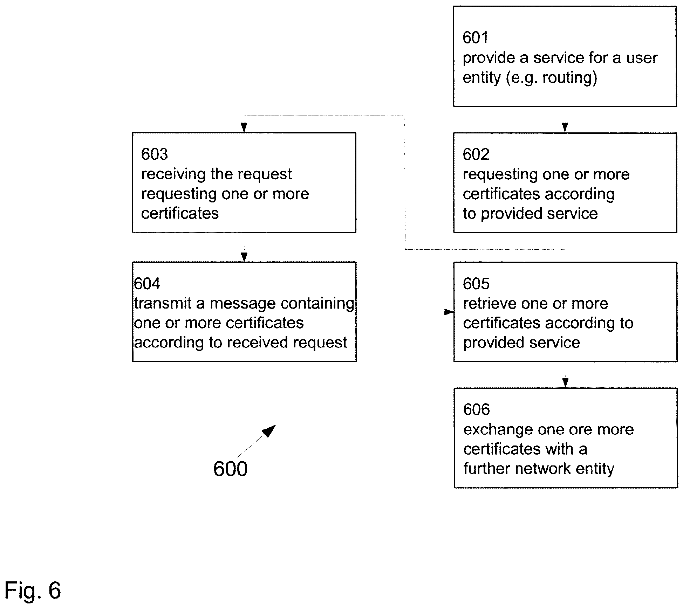

Fig. 6 depicts a flow diagram. Specifically the process 600 is adapted to control a network session and suitable for use within the context of the connected user entities and network entities described above. Generally speaking the process 600 of Fig. 6 contemplate the control of a network session in a network, the network comprising at least one user entity and a group of one or more network entities.

At step 601 a first network entity of the group of network entities provides one or more services to the at least one user entity. For example the one more of the provided services might be routing a message to a destination.

At step 602 the first network entity of the group of network entities request one or more certificates according to one or more of the provided services.

At step 603 the at least one user entity receives the request requesting one or more certificates.

At step 604 the at least one user entity receives transmits a message containing one or more certificates according to received request.

At step 605 the first network entity of the group of network entities retrieves one or more certificates according to one or more of the provided services.

At step 606 the first network entity of the group of network entities may optionally exchange one or more of the retrieved certificates with a second network entity of the group of network entities. Alternatively the first network entity of the group of network entities may provide further services such as described with respect to Fig. 1.

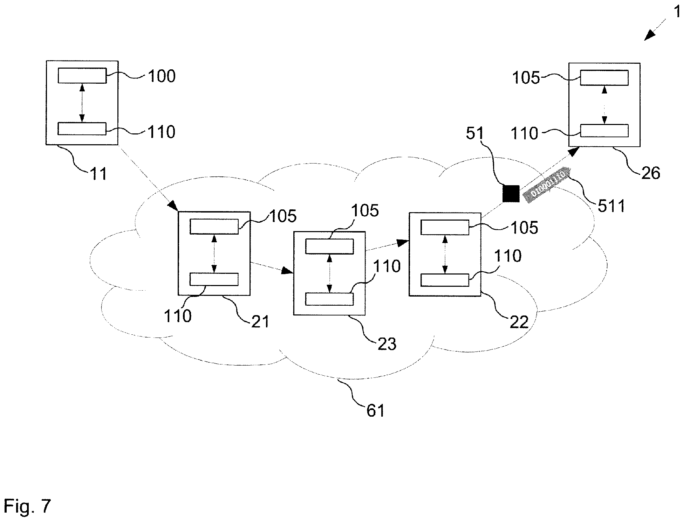

Fig. 7 depicts a schematic representation of a user entity 11 and network entities 21, 22, 23, 26 within a network 1 during a network session. Regarding the user entity 11 and the network entities 21, 22, 23, 26 and the message 51 in this embodiment it is referred to the description of Fig. 1. Moreover the user entity 11 comprise a control unit 100, wherein the control unit 100 is adapted to transmit a message 51 containing one or more certificates 511 to the at least one network entity of the group of network entities 21, 22, 23, 26. Therefore the control unit 100 might be connected to transreceiver 110, wherein the transreceiver is adapted to receive and/or transmit the message 51 containing one or more certificates 511. Here the transreceiver 110 might be an I/O device capable of both transmitting and receiving the message 51.

Furthermore the at least one network entity of the group of network entities 21, 22, 23, 26 may comprise a control unit 105, wherein the control unit 105 is adapted to receive the message 51 containing one or more certificates 511. Moreover the control unit 105 is adapted to retrieve one or more certificates of said one or more certificates and to provide one or more services for the user entity 11. Moreover the control unit 105 might be connected to transreceiver 110 as described above with respect to the control unit 100.

The control units 100 und 105 are provided by hardware means, e.g. one or more processors, computers etc., and/or software means, e.g. application programs, adapted to provide the aforementioned functions of the respective control unit 100, 105, respectively, when being powered or executed, respectively.

The present disclosure provides a process for controlling a network session. According to examples of the disclosure a direct control of the network session by an individual user is possible, e.g. by real time monitoring one or more certificates retrieved by a group of one or more network entities. Furthermore according to the examples of the disclosure it is possible to improve scalability with respect to energy consumption of the network as it could be directly determined during which period most energy is consumed. In addition this helps to renew old network entities which would more properly consume more energy. Consequently such old network entities will be renewed first as old hardware might produce higher costs due to increased energy consumption compared to new hardware. Furthermore according to the examples of the disclosure a regulation of network load by offering the possibility of a uniform utilization of the network is allowed. In other words this correspond to an input-output balance between certificates generated by the certificate generation entity and delivered to the user entities and the certificates retrieved by the network entities. In addition the overall network traffic may be controlled by the control of the total number of certificates or the number of retrieved certificates by a group of network entities. According to examples of the disclosure a reduction of energy consumption during a network session can be achieved and consequently the costs caused by individual users are reduced. Additionally this allows an allocation the energy consumption to at the least one user entity. Besides the reduction in energy consumption this minimizes the network session time and network traffic.

## Claims

1. A method for controlling a network session, the network (1, 2, 3) comprising at least one user entity (11, 12, 13, 14, 15, 16, 17) and a group of one or more network entities (21, 22, 23, 24, 25, 26, 81, 82, 83, 84, 85), wherein the network session is a power line network session between the at least one user entity (11, 12, 13, 14, 15, 16, 17) and the group of one or more network entities (21, 22, 23, 24, 25, 26, 81, 82, 83, 84, 85), the method comprising:
- providing (503) by at least one network entity of the group of network entities one or more services for the at least one user entity during the network session;
- receiving (501) during the network session a message (51) by at least one network entity of the group of network entities, wherein the message (51) contains one or more certificates (511);
- retrieving (504) one or more of the one or more certificates (511) contained in the message (51) by at least one network entity of the group of network entities according to one or more of the provided services, wherein the at least one network entity of the group of network entities determines an energy consumption of the one or more provided services and retrieves one or more certificates (511) according to the determined energy consumption.

2. The method according to claim 1, wherein the step of receiving further comprises:
- receiving (501, 505) during the network session the message (51) by a first network entity of the group of network entities and forwarding the message by the first network entity of the group of network entities to a second network entity of the group of network entities,
and wherein the step of retrieving one or more certificates comprises retrieving one or more certificates (511) by the first network entity of the group of network entities and by the second network entity of the group of network entities.

3. The method according to claim 1, wherein the method comprises:
- receiving (603) by the at least one user entity a request requesting one or more certificates (511)
- sending (604) the message (51) containing one or more certificates (511) according to the received request.

4. The method according to one of the claims 1 to 3, wherein the method further comprises:
- forwarding (606) by one or more network entities of the group of network entities one or more of the retrieved certificates (511) to one or more other network entities of the group of network entities, when at least one of the following conditions has occurred: (a) when the network session is already finished; (b) when one of the one or more network entities fails; (c) when the one or more network entities provides one or more services to the one or more other network entities.

5. The method according to claim 1, wherein the message is a data frame (51) of the network session.

6. The method according to claim 5, wherein the data frame (51) comprises at least a destination address (91), a source address (92), a data section (93) and a certificate section (94).

7. The method according to claim 1, wherein the one or more certificates are binary coded certificates.

8. The method according to claim 1, wherein the one or more certificates are associated with one or more network addresses, in particular internet protocol, IP, addresses.

9. The method according to claim 1, wherein the at least one network entity of the group of network entities is selected from the group consisting of a router (23), a switch (22), a server (26), a gateway (24) and an access point (21, 25).

10. The method according to claim 1, wherein the step of providing comprises:
- providing an electrical current (53) for the at least one user entity (15, 16, 17).

11. The method according to claim 10, wherein the at least one network entity of the group of network entities is selected from the group consisting of a transformer station (82), a electricity producer (81), a electricity network operator (83), a distribution grid (84) and a power line (73).

12. A network entity (21, 22, 23, 24, 25, 26, 81, 82, 83, 84, 85), comprising a control unit (105),
wherein the control unit (105) is adapted to receive a message (51) containing one or more certificates (511) and to retrieve one or more certificates (511) of said one or more certificates (511) according to one or more services provided for at least one user entity (11, 12, 13, 14, 15, 16, 17) during a network session, wherein the network session is a power line network session between the at least one user entity (11, 12, 13, 14, 15, 16, 17) and the network entity (21, 22, 23, 24, 25, 26, 81, 82, 83, 84, 85) providing a service to the at least one user entity (11, 12, 13, 14, 15, 16, 17) during the network session, wherein the network entity determines an energy consumption of one or more provided services and retrieves one or more certificates (511) of the one or more certificates (511) contained in the message according to the determined energy consumption.

## Patentansprüche

1. Verfahren zum Steuern einer Netzwerksitzung, wobei das Netzwerk (1, 2, 3) mindestens eine Benutzereinheit (11, 12, 13, 14, 15, 16, 17) und eine Gruppe einer oder mehrerer Netzwerkeinheiten (21, 22, 23, 24, 25, 26, 81, 82, 83, 84, 85) umfasst, wobei die Netzwerksitzung eine Stromleitungsnetzwerksitzung zwischen der mindestens einen Benutzereinheit (11, 12, 13, 14, 15, 16, 17) und der Gruppe einer oder mehrerer Netzwerkeinheiten (21, 22, 23, 24, 25, 26, 81, 82, 83, 84, 85) ist, wobei das Verfahren umfasst:
- Bereitstellen (503) eines oder mehrerer Dienste für die mindestens eine Benutzereinheit durch mindestens eine Netzwerkeinheit der Gruppe von Netzwerkeinheiten während der Netzwerksitzung;
- Empfangen (501) einer Nachricht (51) während der Netzwerksitzung durch mindestens eine Netzwerkeinheit der Gruppe von Netzwerkeinheiten, wobei die Nachricht (51) ein oder mehrere Zertifikate (511) enthält;
- Abrufen (504) eines oder mehrerer der in der Nachricht (51) enthaltenen Zertifikate (511) durch mindestens eine Netzwerkeinheit der Gruppe von Netzwerkeinheiten gemäß einem oder mehreren der bereitgestellten Dienste, wobei die mindestens eine Netzwerkeinheit der Gruppe von Netzwerkeinheiten einen Energieverbrauch der einen oder mehreren bereitgestellten Dienste bestimmt und ein oder mehrere Zertifikate (511) gemäß dem bestimmten Energieverbrauch abruft.

2. Verfahren nach Anspruch 1, wobei der Schritt zum Empfangen ferner umfasst:
- Empfangen (501, 505) der Nachricht (51) während der Netzwerksitzung durch eine erste Netzwerkeinheit der Gruppe von Netzwerkeinheiten und Weiterleiten der Nachricht durch die erste Netzwerkeinheit der Gruppe von Netzwerkeinheiten an eine zweite Netzwerkeinheit der Gruppe von Netzwerkeinheiten, und wobei der Schritt zum Abrufen eines oder mehrerer Zertifikate das Abrufen eines oder mehrerer Zertifikate (511) durch die erste Netzwerkeinheit der Gruppe von Netzwerkeinheiten und durch die zweite Netzwerkeinheit der Gruppe von Netzwerkeinheiten umfasst.

3. Verfahren nach Anspruch 1, wobei das Verfahren umfasst:
- Empfangen (603) einer Anforderung, die ein oder mehrere Zertifikate (511) anfordert, durch die mindestens eine Benutzereinheit.
- Senden (604) der Nachricht (51), die ein oder mehrere Zertifikate (511) enthält, gemäß der empfangenen Anforderung.

4. Verfahren nach einem der Ansprüche 1 bis 3, wobei das Verfahren ferner umfasst:
- Weiterleiten (606) eines oder mehrerer der abgerufenen Zertifikate (511) durch eine oder mehrere Netzwerkeinheiten der Gruppe von Netzwerkeinheiten an eine oder mehrere andere Netzwerkeinheiten der Gruppe von Netzwerkeinheiten, wenn mindestens eine der folgenden Bedingungen eingetreten ist: (a) wenn die Netzwerksitzung bereits beendet ist; (b) wenn eine der einen oder mehreren Netzwerkeinheiten ausfällt; (c) wenn die eine oder die mehreren Netzwerkeinheiten einen oder mehrere Dienste für die eine oder mehreren anderen Netzwerkeinheiten bereitstellen.

5. Verfahren nach Anspruch 1, wobei die Nachricht ein Datenrahmen (51) der Netzwerksitzung ist.

6. Verfahren nach Anspruch 5, wobei der Datenrahmen (51) mindestens eine Zieladresse (91), eine Quelladresse (92), einen Datenabschnitt (93) und einen Zertifikatsabschnitt (94) umfasst.

7. Verfahren nach Anspruch 1, wobei das eine oder die mehreren Zertifikate binär-codierte Zertifikate sind.

8. Verfahren nach Anspruch 1, wobei das eine oder die mehreren Zertifikate einer oder mehreren Netzwerkadressen, insbesondere Internetprotokoll, IP, - Adressen zugeordnet sind.

9. Verfahren nach Anspruch 1, wobei die mindestens eine Netzwerkeinheit der Gruppe von Netzwerkeinheiten aus der Gruppe bestehend aus einem Router (23), einem Switch (22), einem Server (26), einem Gateway (24) und einem Zugangspunkt (21, 25) ausgewählt wird.

10. Verfahren nach Anspruch 1, wobei der Schritt zum Bereitstellen umfasst:
- Bereitstellen eines elektrischen Stroms (53) an die mindestens eine Benutzereinheit (15, 16, 17).

11. Verfahren nach Anspruch 10, wobei die mindestens eine Netzeinheit der Gruppe von Netzeinheiten aus der Gruppe bestehend aus einer Trafostation (82), einem Stromerzeuger (81), einem Stromnetzbetreiber (83), einem Verteilungsnetz (84) und einer Stromleitung (73) ausgewählt wird.

12. Netzwerkeinheit (21, 22, 23, 24, 25, 26, 81, 82, 83, 84, 85), umfassend eine Steuereinheit (105), wobei die Steuereinheit (105) dazu eingerichtet ist, eine Nachricht (51) zu empfangen, die ein oder mehrere Zertifikate (511) enthält, und ein oder mehrere Zertifikate (511) des einen oder der mehreren Zertifikate (511) gemäß einem oder mehreren Diensten abzurufen, die für mindestens eine Benutzereinheit (11, 12, 13, 14, 15, 16, 17) während einer Netzwerksitzung bereitgestellt werden, wobei die Netzwerksitzung eine Stromleitungsnetzwerksitzung zwischen der mindestens einen Benutzereinheit (11, 12, 13, 14, 15, 16, 17) und der Netzwerkeinheit (21, 22, 23, 24, 25, 26, 81, 82, 83, 84, 85), die während der Netzwerksitzung einen Dienst für die mindestens eine Benutzereinheit (11, 12, 13, 14, 15, 16, 17) bereitstellt, ist, wobei die Netzwerkeinheit einen Energieverbrauch eines oder mehrerer bereitgestellter Dienste bestimmt und ein oder mehrere Zertifikate (511) der einen oder mehreren in der Nachricht enthaltenen Zertifikate (511) gemäß dem bestimmten Energieverbrauch abruft.

## Revendications

1. Procédé pour commander une session de réseau, le réseau (1, 2, 3) comprenant au moins une entité d'utilisateur (11, 12, 13, 14, 15, 16, 17) et un groupe d'une ou plusieurs entités de réseau (21, 22, 23, 24, 25, 26, 81, 82, 83, 84, 85), la session de réseau étant une session de réseau sur ligne d'alimentation électrique entre l'au moins une entité d'utilisateur (11, 12, 13, 14, 15, 16, 17) et le groupe d'une ou plusieurs entités de réseau (21, 22, 23, 24, 25, 26, 81, 82, 83, 84, 85), le procédé comprenant :
- la fourniture (503), par au moins une entité de réseau du groupe d'entités de réseau, d'un ou de plusieurs services pour l'au moins une entité d'utilisateur durant la session de réseau ;
- la réception (501), durant la session de réseau, d'un message (51) par au moins une entité de réseau du groupe d'entités de réseau, le message (51) contenant un ou plusieurs certificats (511) ;
- la récupération (504) d'un ou de plusieurs desdits un ou plusieurs certificats (511) contenus dans le message (51) par au moins une entité de réseau du groupe d'entités de réseau en fonction d'un ou de plusieurs des services fournis, l'au moins une entité de réseau du groupe d'entités de réseau déterminant une consommation d'énergie desdits un ou plusieurs services fournis et récupérant un ou plusieurs certificats (511) en fonction de la consommation d'énergie déterminée.

2. Procédé selon la revendication 1, dans lequel l'étape de réception comprend en outre :
- la réception (501, 505), durant la session de réseau, du message (51) par une première entité de réseau du groupe d'entités de réseau et le réacheminement du message par la première entité de réseau du groupe d'entités de réseau à une deuxième entité de réseau du groupe d'entités de réseau,
et dans lequel l'étape de récupération d'un ou plusieurs certificats comprend la récupération d'un ou de plusieurs certificats (511) par la première entité de réseau du groupe d'entités de réseau et par la deuxième entité de réseau du groupe d'entités de réseau.

3. Procédé selon la revendication 1, le procédé comprenant :
- la réception (603), par l'au moins une entité d'utilisateur, d'une requête demandant un ou plusieurs certificats (511)
- l'envoi (604) du message (51) contenant un ou plusieurs certificats (511) en fonction de la requête reçue.

4. Procédé selon l'une des revendications 1 à 3, le procédé comprenant en outre :
- le réacheminement (606), par une ou plusieurs entités de réseau du groupe d'entités de réseau, d'un ou de plusieurs des certificats récupérés (511) à une ou plusieurs autres entités de réseau du groupe d'entités de réseau, lorsqu'au moins une des conditions suivantes est survenue : (a) lorsque la session de réseau a déjà fini ; (b) lorsqu'une desdites une ou plusieurs entités de réseau est en défaillance ; (c) lorsque lesdites une ou plusieurs entités de réseau fournissent un ou plusieurs services auxdites une ou plusieurs autres entités de réseau.

5. Procédé selon la revendication 1, dans lequel le message est une trame de données (51) de la session de réseau.

6. Procédé selon la revendication 5, dans lequel la trame de données (51) comprend au moins une adresse de destination (91), une adresse source (92), une section de données (93) et une section pour certificat (94).

7. Procédé selon la revendication 1, dans lequel lesdits un ou plusieurs certificats sont des certificats à codage binaire.

8. Procédé selon la revendication 1, dans lequel lesdits un ou plusieurs certificats sont associés à une ou plusieurs adresses de réseau, en particulier des adresses de protocole internet, IP.

9. Procédé selon la revendication 1, dans lequel l'au moins une entité de réseau du groupe d'entités de réseau est sélectionnée parmi le groupe consistant en un routeur (23), un commutateur (22), un serveur (26), une passerelle (24) et un point d'accès (21, 25).

10. Procédé selon la revendication 1, dans lequel l'étape de fourniture comprend :
- la fourniture d'un courant électrique (53) pour l'au moins une entité d'utilisateur (15, 16, 17).

11. Procédé selon la revendication 10, dans lequel l'au moins une entité de réseau du groupe d'entités de réseau est sélectionnée parmi le groupe consistant en un poste transformateur (82), un producteur d'électricité (81), un opérateur de réseau d'électricité (83), une grille de distribution (84) et une ligne d'alimentation d'énergie (73).

12. Entité de réseau (21, 22, 23, 24, 25, 26, 81, 82, 83, 84, 85), comprenant une unité de commande (105),
l'unité de commande (105) étant conçue pour recevoir un message (51) contenant un ou plusieurs certificats (511) et pour récupérer un ou plusieurs certificats (511) parmi lesdits un ou plusieurs certificats (511) en fonction d'un ou de plusieurs services fournis pour au moins une entité d'utilisateur (11, 12, 13, 14, 15, 16, 17) durant une session de réseau, la session de réseau une session de réseau sur ligne d'alimentation électrique entre l'au moins une entité d'utilisateur (11, 12, 13, 14, 15, 16, 17) et l'entité de réseau (21, 22, 23, 24, 25, 26, 81, 82, 83, 84, 85) fournissant un service à l'au moins une entité d'utilisateur (11, 12, 13, 14, 15, 16, 17) durant la session de réseau, l'entité de réseau déterminant une consommation d'énergie d'un ou de plusieurs services fournis et récupérant un ou plusieurs certificats (511) parmi lesdits un ou plusieurs certificats (511) contenus dans le message en fonction de la consommation d'énergie déterminée.
